(19) **Europäisches Patentamt**

**European Patent Office**

**Office européen des brevets**

(11) Veröffentlichungsnummer : **0 100 475**
**B1**

(12) # EUROPÄISCHE PATENTSCHRIFT

(45) Veröffentlichungstag der Patentschrift :
**26.03.86**

(51) Int. Cl.⁴ : **G 02 B 21/24, G 02 B 21/26**

(21) Anmeldenummer : **83106978.6**

(22) Anmeldetag : **16.07.83**

(54) **Tisch für Durchlichtmikroskope.**

(30) Priorität : **21.07.82 DEU 8220792**

(43) Veröffentlichungstag der Anmeldung :
**15.02.84 Patentblatt 84/07**

(45) Bekanntmachung des Hinweises auf die Patenterteilung : **26.03.86 Patentblatt 86/13**

(84) Benannte Vertragsstaaten :
**AT CH DE GB LI**

(56) Entgegenhaltungen :
**EP-A- 0 029 238**
**DE-A- 3 110 366**
**US-A- 3 572 888**
**US-A- 4 262 991**
**PATENTS ABSTRACTS OF JAPAN, Band 6, Nr. 27 (P-102) (905), 17. Februar 1982**

(73) Patentinhaber : **Firma Carl Zeiss**

**D-7920 Heidenheim (Brenz) (DE)**
**CH DE LI AT**
**CARL-ZEISS-STIFTUNG Trading as CARL ZEISS**

**D-7920 Heidenheim (Brenz) (DE)**
**GB**

(72) Erfinder : **Weber, Klaus, Dr.**
**Baumgartenweg 22**
**D-7923 Königsbronn (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

## Beschreibung

Die Erfindung betrifft einen Tisch für Durchlichtmikroskope zum Arbeiten mit Objektträgern zweier unterschiedlicher Dicken.

Beispielsweise werden bei mikroskopischen Untersuchungen im klinischen Routinelabor bzw. im Labor von Arztpraxen fast ausschließlich nur zwei Klassen unterschiedlich dicker Objektträger verwendet, nämlich die 1 mm dicken Standardobjektträger und die 4 bzw. 5 mm dicken Blutzählkammern. Da diese Objektträger in der Regel direkt auf den Tisch des Mikroskops aufgelegt werden, ist bei einem Wechsel zwischen Objektträgern beider Klassen ein Nachfokussieren sowohl auf der Beobachtungsseite als auch auf der Beleuchtungsseite erforderlich. Dies ist für den Benutzer lästig und erhöht die Gefahr von Fehlbedienungen, gerade auf der Beleuchtungsseite, was zu Fehlinterpretationen der beobachteten Proben führen kann.

Aus der DE-A-29 46 544 A1 ist ein Objekthaltersystem für Durchlichtmikroskope bekannt (Fig. 1-3), bei dem die Objekte jeweils an eine Tischunterkante des Mikroskops angelegt werden, deren Oberflächen somit unabhängig von der Objektträgerdicke stets in der Schärfenebene liegen, so daß ein Nachfokussieren auf der Beobachtungsseite entfällt. Auf der Beleuchtungsseite wird zum Ausgleich der Glasdicke der Objektträger ein Teil der Frontlinse des verwendeten Kondensors entfernt bzw. aufgesetzt.

Bei diesem System müssen die Blutzählkammern in spezielle, in ihren Außenabmessungen auf die Standardobjektträger abgestimmte Rahmen eingefaßt werden.

Es ist die Aufgabe der vorliegenden Erfindung, einen Tisch für Mikroskope zu schaffen, auf den die Proben in herkömmlicher Weise einfach aufgelegt werden können und der ein wechselseitiges Verwenden von Standard-Objektträgern und Zählkammern ohne größere Einstellarbeiten ermöglicht.

Diese Aufgabe wird gemäß dem Kennzeichen des Hauptanspruchs dadurch gelöst, daß der Tisch eine senkrecht zur optischen Achse bewegliche Abstufung besitzt, die ein Glasfenster trägt, dessen Dicke etwa der Höhe der Stufe entspricht.

Mit dieser Maßnahme wird erreicht, daß der Tisch zwei, durch einfaches Verschieben gegeneinander wechselbare Auflagehöhen besitzt, die die Dickendifferenz der beiden Klassen von Objektträgern beobachtungsseitig kompensieren. Beleuchtungsseitig sorgt das in die als Auflage für die dünneren Standardobjektträger dienende Stufe des Tisches integrierte Fenster für gleichbleibende Gesamtglasdicke und damit gleichwertige optische Verhältnisse.

Das beim Wechseln des Objektträgertyps sonst nötige Aufsuchen der Schärfenebene und Nachstellen des Kondensors entfällt also bei dieser Lösung, die nur geringfügige Modifikationen an den zur Zeit gebräuchlichen Mikroskoptischen erfordert.

Zweckmäßig wird die beim Wechseln der Objektträger bewegte Abstufung durch einen entweder direkt in der Tischplatte oder in einem Tischaufsatz geführten Schieber gebildet, auf den die dünneren Standardobjektträger aufgelegt werden können, und der nach dem Herausziehen eine die dickeren Blutzählkammern aufnehmende Vertiefung freigibt.

In einer weiteren vorteilhaften Ausgestaltung kann ein Kreuztisch mit in einer Richtung erweiterten Bewegungsbereich verwendet werden, in dessen Tischplatte die Abstufung direkt eingearbeitet ist, und der dann zweckmäßig einen über die Stufe hinweggreifenden Objekthalter mit zwei Klemmen, einer Klemme für Standard-Objekthalter und einer Klemme für Blutzählkammern, besitzt. Zum Wechseln wird hier einfach der Kreuztisch in die benötigte Position durchgeschoben.

Weitere vorteilhafte Ausgestaltungen der Erfindung finden sich in den Unteransprüchen und werden nachstehend anhand der Figuren 1-7 der beigefügten Zeichnungen näher erläutert : Dabei zeigen

Figur 1 eine Schnittzeichnung durch ein erstes Ausführungsbeispiel in einer ersten Schaltstellung ;

Figur 2 eine Schnittzeichnung durch das Ausführungsbeispiel aus Fig. 1 in einer zweiten Schaltstellung ;

Figur 3 das Ausführungsbeispiel nach Fig. 1 in Aufsicht ;

Figur 4 eine Schnittzeichnung eines zweiten Ausführungsbeispiels ;

Figur 5 das Ausführungsbeispiel nach Fig. 4 in Aufsicht ;

Figur 6 eine Schnittzeichnung eines dritten Ausführungsbeispiels ;

Figur 7 den Objekthalter 30 des dritten Ausführungsbeispiels in Aufsicht.

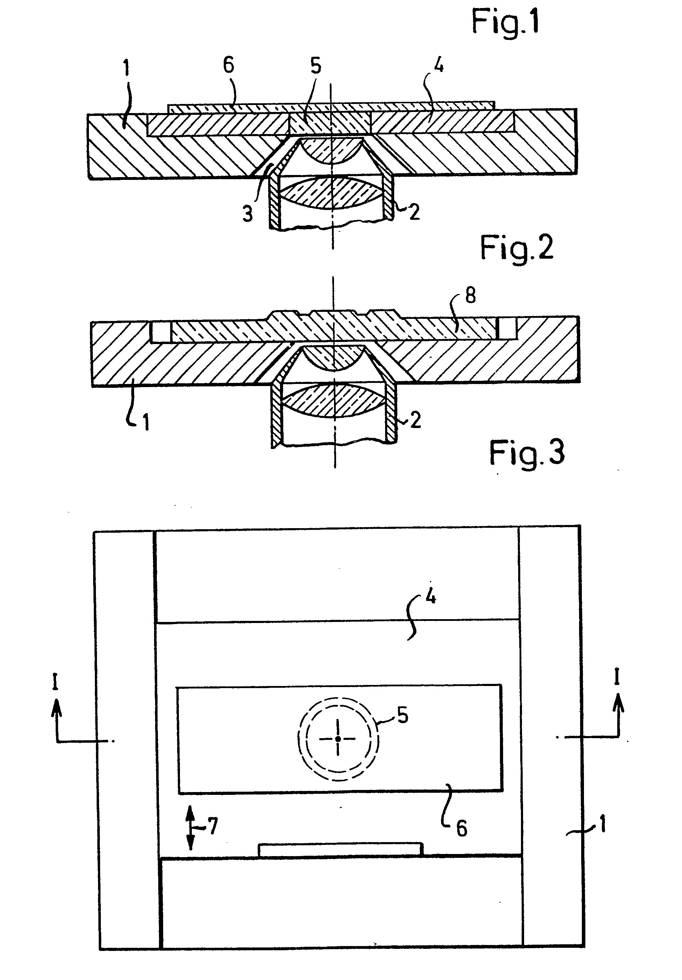

Das in den Fig. 1-3 dargestellte Ausführungsbeispiel besteht aus einer am Mikroskop zu befestigenden, unbeweglichen Tischplatte 1, die eine Ausnehmung 3 besitzt, in die der unter dem Tisch angeordnete Kondensor 2 hineinragt. In die Oberseite des Tisches 1 ist ein Schieber 4 eingelassen, der in der über dem Kondensor 2 gelegenen Stelle ein Glasfenster 5 trägt. Auf dem Schieber 4 liegt ein Standard-Objektträger 6 auf, der zum Durchmustern von Hand verschoben werden kann.

Wie Fig. 3 zeigt, läßt sich der Schieber 4 in Richtung des Pfeiles 7 aus der in Fig. 1 dargestellten Position herausbewegen und gibt eine zum Auflegen einer Blutzählkammer 8 geeignete Vertiefung frei (Fig. 2). Die Stärke des Schiebers 4 bzw. des Fensters 5 entspricht der Dickendifferenz zwischen der Blutzählkammer 8 und dem Standard-Objektträger 6, für die nun, gleiche Brechwerte des Glases für das Fenster 5, die Kammer 8 und den Objektträger 6 vorausgesetzt, identische optische Verhältnisse sowohl auf der Beobachtungs- als auch auf der Beleuchtungsseite vorliegen, wenn man von unvermeidbaren Dickenstreuungen innerhalb der beiden Objektträgertypen einmal absieht.

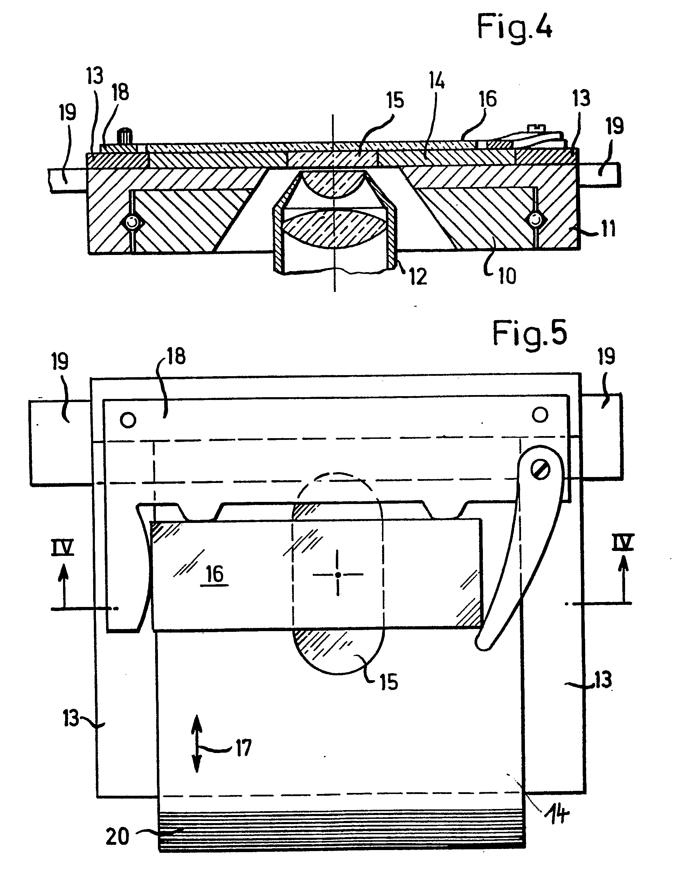

In den Fig. 4 und 5 ist ein Kreuztisch dargestellt, dessen Oberteil 11 sich in einer Koordinate gegen das am Mikroskop befestigte Unterteil 10 verschieben läßt. In das Oberteil 11 ist ein Objektführer 19 eingebaut, über den der daran befestigte und mit dem Klemmhebel den Objektträger 16 fixierende Objekthalter 18 in der zweiten Koordinate geführt wird.

Zwischen dem Objekthalter 18 und der Tischplatte 11 ist eine Zwischenplatte 13 am Tischteil 11 befestigt, deren Mittelteil 14 als Schieber ausgebildet ist und mit Hilfe der vorn überstehenden Riffelung 20 in Richtung des Pfeiles 17 ausgezogen werden kann. Nach dem Herausziehen des Schiebers 14 können in den Objekthalter 18 die dickeren Blutzählkammern eingesetzt werden.

Dieses Ausführungsbeispiel hat den Vorteil, daß bereits vorhandene Tische verwendet werden können, da der Schieber in ein nachzurüstendes Aufsatzteil integriert ist.

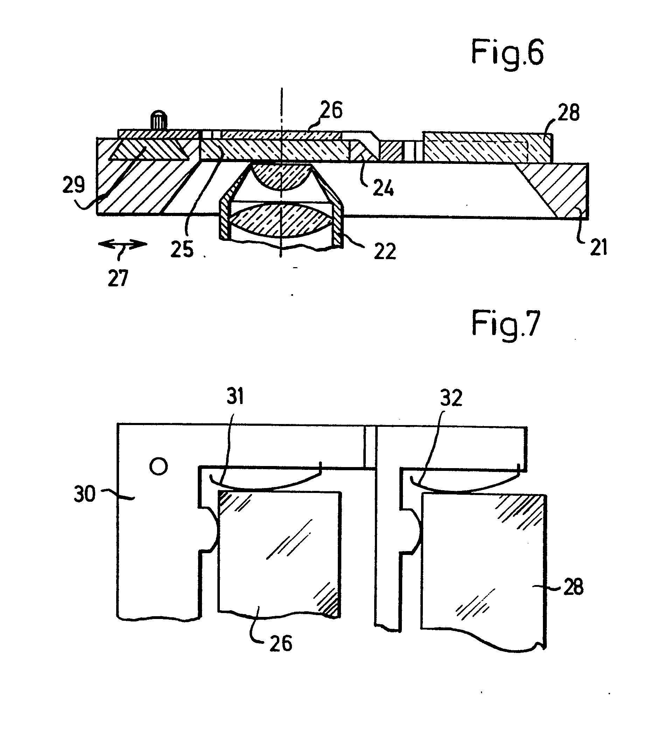

Im dritten Ausführungsbeispiel nach Fig. 6 trägt die in Richtung des Pfeiles 27 verschiebbare und mit einem relativ großen Bewegungsbereich ausgestattete Tischplatte 21 eines Kreuztisches eine Abstufung 24, die den Tisch zweiteilt. In das in der gezeigten Stellung über dem Kondensor befindliche höhere Tischteil, auf das die Standard-Objektträger 26 aufzulegen sind, ist ein Fenster 25 eingelassen, das wieder die unterschiedlichen Glasdicken der verwendeten Objektträger ausgleicht. Die Blutzählkammern 28 werden auf den vorderen, tiefer liegenden Teil des Tisches 21 aufgelegt.

Zur Fixierung der Objektträger 26 bzw. 28 dient wieder ein am Objektführer 29 im Tisch 21 befestigter Objekthalter 30. Dieser besitzt wie in der Aufsicht nach Fig. 7 zu erkennen ist, zwei separate Klemmplätze, in denen Blattfedern 31 bzw. 32 die eingelegten Standard-Objektträger 26 bzw. Zählkammern 28 halten.

Zum Wechsel zwischen den Beobachtungspositionen der beiden Objektträgertypen ist bei dieser Ausführungsform also einfach der Kreuztisch nach hinten durchzuschieben.

**Patentansprüche**

1. Tisch für Durchlichtmikroskope zum Arbeiten mit Objektträgern zweier unterschiedlicher Dicken, dadurch gekennzeichnet, daß der Tisch (1 ; 11 ; 21) eine senkrecht zur optischen Achse bewegliche Abstufung (4 ; 14 ; 24) besitzt, die ein Glasfenster (5 ; 15 ; 25) trägt, dessen Dicke etwa der Höhe der Stufe entspricht.

2. Tisch nach Anspruch 1, dadurch gekennzeichnet, daß die Abstufung durch einen direkt im Tisch (1) geführten Schieber (4) gebildet ist.

3. Tisch nach Anspruch 1, dadurch gekennzeichnet, daß die Abstufung von einer in einem Tischaufsatz (13) gleicher Stärke geführten Schieber (14) gebildet ist.

4. Tisch nach Anspruch 2-3, dadurch gekennzeichnet, daß der Schieber (14) einseitig über eine Tischkante vorsteht.

5. Tisch nach Anspruch 2-4, dadurch gekennzeichnet, daß der Schieber (14) mit einer Riffelung (20) versehen ist.

6. Tisch nach Anspruch 1, dadurch gekennzeichnet, daß der Tisch ein in einer Koordinate mit erweitertem Bewegungsbereich ausgestatteter Kreuztisch ist, in dessen Tischplatte (21) die Stufe (24) eingearbeitet ist.

7. Tisch nach Anspruch 6, dadurch gekennzeichnet, daß der Tisch (21) einen über die Stufe (24) hinweggreifenden Objekthalter (30) trägt, der zwei Klemmen (31, 32) besitzt.

**Claims**

1. A stage for a transmitted illumination microscope adapted to work with specimen slides of two different thicknesses, characterized by the fact that the stage (1 ; 11 ; 21) has a step portion (4 ; 14 ; 24) which is displaceable perpendicular to the optical axis and carries a window (5 ; 15 ; 25) the thickness of which corresponds substantially to the height of said step portion.

2. A stage according to claim 1, characterized by the fact that said step portion is a slide plate (4) guided within stage 1.

3. A stage according to claim 1, characterized by the fact that said step portion is a slide plate (14) guided within an attachable mechanical stage (13) of equal thickness.

4. A stage according to claim 2-3, characterized by the fact that said slide plate (14) protrudes at one side beyond the edge of the stage.

5. A stage according to claim 2-4, characterized by the fact that said slide plate (14) carries a groove (20).

6. A stage according to claim 1, characterized by the fact that the stage is a cross slide stage having an extended range of displaceability into one direction, the step portion (24) being worked into the stage plate (21) of said cross slide stage.

7. A stage according to claim 6, characterized by the fact that the stage (21) carries a slide holder (30), which extends beyond said step portion (24) and has two clamps (31, 32).

**Revendications**

1. Platine microscopique (1 ; 11 ; 21) servant à l'observation des porte-objets d'épaisseur variable, caractérisée en ce qu'elle comporte un échelon (4 ; 14 ; 24) qui est mobile selon un axe perpendiculaire à l'axe optique et qui porte une lame de verre (5 ; 15 ; 25) dont l'épaisseur correspond à peu près à la hauteur de l'échelon.

2. Platine selon revendication 1, caractérisée en ce que l'échelon est formé d'un coulisseau (4) qui se déplace dans la platine (1) directement.

3. Platine selon revendication 1, caractérisée en ce que l'échelon est formé d'un coulisseau (14) se déplaçant dans une platine adaptable (13) de même épaisseur.

4. Platine selon les revendications 2 à 3, caractérisée en ce que le coulisseau (14) dépasse d'un côté le bord de la platine.

5. Platine selon les revendications 2 à 4, caractérisée en ce que le coulisseau (14) comprend une partie cannelée (20).

6. Platine selon revendication 1, caractérisée en ce qu'il s'agit d'une platine à mouvements croisés qui présente une plage de déplacement élargie selon une coordonnée et/ou l'échelon (24) est intégré à la plaque de platine (21).

7. Platine selon revendication 6, caractérisée en ce qu'elle reçoit un support d'objet (30) qui déborde l'échelon (24) et qui est doté de deux pinces à ressort (31, 32).

Fig.1

Fig.2

Fig.3

Fig.4

Fig.5

## Fig.6

## Fig.7